# EUROPEAN PATENT APPLICATION

(11) **EP 3 270 645 A1**
(43) Date of publication of application: **17.01.2018**
(21) Application number: 16765208.0
(22) Date of filing: 11.03.2016
(51) Int. Cl.: H04W 68/02, H04W 74/08

(54) **METHOD AND DEVICE FOR CALLING TERMINAL IN WIRELESS COMMUNICATION SYSTEM**

(30) Priority: 13.03.2015 US 201562132815 P; 15.05.2015 US 201562161991 P
(71) Applicant: Samsung Electronics Co., Ltd., Gyeonggi-do 16677 (KR)
(72) Inventor: WON, Sung Hwan, Gyeonggi-do, 16677 (KR); KIM, Sunghoon, Gyeonggi-do, 16677 (KR); CHO, Songyean, Gyeonggi-do, 16677 (KR)
(74) Representative: Gulde & Partner
(86) International application number: PCT/KR2016/002479
(87) International publication number: WO 2016/148452

(57) **Abstract**

This disclosure relates to a 5G or pre-5G communication system for supporting a higher data transfer rate after a 4G communication system such as LTE. In one embodiment for paging a terminal, a base station identifies information on a coverage enhancement (CE) level of the terminal and transmits a message including the information on the CE level of the terminal to a mobility management entity (MME). When a paging message including the information on the CE level from the MME is received, the base station transmits a paging signal to the terminal, based on the CE level of the terminal.

## Description

### [Technical Field]

The present invention relates to a wireless communication system, and more particularly, to a method and apparatus for efficiently paging a terminal having poor reception performance.

### [Background Art]

In order to satisfy increasing demands of radio data traffic after the commercialization of a 4G communication system, efforts at developing an advanced 5G communication system or a pre-5G communication system have been made. For this reason, the 5G communication system or the pre-5G communication system is also referred to as a beyond-4G network communication system or a post-LTE system.

In order to accomplish a higher data transfer rate, the 5G communication system considers implementation at a super-high frequency (mmWave) band (e.g., such as a 60GHz band). In order to obviate a path loss of a radio wave and increase a delivery distance of a radio wave at the super-high frequency band, various techniques such as a beamforming, a massive MIMO, a full dimensional MIMO (FD-MIMO), an array antenna, an analog beam-forming, and a large scale antenna are discussed in the 5G communication system.

Additionally, for an improvement in network of the 5G communication system, technical developments are made in an advanced small cell, a cloud radio access network (cloud RAN), an ultra-dense network, a device to device (D2D) communication, a wireless backhaul, a moving network, a cooperative communication, coordinated multi-points (CoMP), a reception interference cancellation, and the like.

Besides, in the 5G communication system, a hybrid FSK and QAM modulation (FQAM) and a sliding window superposition coding (SWSC) are developed as advanced coding modulation (ACM) schemes, and a filter bank multi carrier (FBMC), a non orthogonal multiple access (NOMA), and a sparse code multiple access (SCMA) are also developed as advanced access techniques.

Meanwhile, there is a need for a method for successfully paging a terminal having poor reception performance or a terminal located in a weak signal-received area.

### [Disclosure of Invention]

### [Technical Problem]

In order to solve the above problems, the present invention provides a method and apparatus for identifying a coverage enhancement level (CE level) of a terminal and transmitting a paging signal according to the CE level of the terminal.

### [Solution to Problem]

In a wireless communication system according to an embodiment of the present invention, a method for paging a terminal by a base station may comprise steps of identifying information on a coverage enhancement (CE) level of the terminal, transmitting a message including the information on the CE level of the terminal to a mobility management entity (MME), and transmitting a paging signal to the terminal, based on the CE level of the terminal, if a paging message including the information on the CE level from the MME is received.

Meanwhile, in the wireless communication system, a method for transmitting a paging message by a mobility management entity (MME) may comprise steps of receiving a message including information on a coverage enhancement (CE) level of a terminal from a base station if the information on the CE level of the terminal is identified by the base station, storing the received information on the CE level of the terminal, and transmitting a paging message including the information on the CE level of the terminal if a notification based on downlink data for the terminal is received.

Additionally, in the wireless communication system, a method of a terminal may comprise steps of receiving a system information block (SIB) message including information on a physical random access channel (PRACH) according to a coverage enhancement (CE) level of the terminal from a base station, and transmitting a random access preamble to the base station by using PRACH resource information corresponding to the CE level of the terminal.

### [Advantageous Effects of Invention]

According to an embodiment of the present invention, it is possible to successfully page even a terminal having poor reception performance or even a terminal located in a weak signal-received area.

### [Brief Description of Drawings]

FIG. 1 is a diagram illustrating a method for paging a terminal according to an embodiment of the present invention.
FIG. 2 is a flow diagram illustrating a method for identifying a CE level of a terminal by a base station according to an embodiment of the present invention.
FIG. 3 is a sequence diagram illustrating a method for delivering a paging message including a CE level of a terminal by an MME according to an embodiment of the present invention.
FIG. 4 is a block diagram illustrating a configuration of a base station according to an embodiment of the present invention.
FIG. 5 is a block diagram illustrating a configuration of an MME according to an embodiment of the present invention.
FIG. 6 is a block diagram illustrating a configuration of a terminal according to an embodiment of the present invention.

### [Mode for the Invention]

Hereinafter, embodiments of the present invention will be described with reference to the accompanying drawings. Through the drawings, the same reference numerals denote corresponding features consistently. Additionally, well known functions and configurations may not be described or illustrated in detail to avoid obscuring the subject matter of the present invention.

Although embodiments of the present invention will be described hereinafter by mainly targeting long-term evolution (LTE) and evolved packet core (EPC), which are a radio access network (RAN) and a core network (CN) defined as standards by the 3rd generation partnership project (3GPP), the essential concept of the present invention may be also applied to any other communication system having a similar technical background without departing from the scope of this invention as will be apparent to those skilled in the art.

It will be also understood by those skilled in the art that the present invention may be embodied in any other specific form without changing technical subject matters and essential features thereof. Therefore, embodiments set forth herein are exemplary only and not to be construed as a limitation.

In embodiments, all steps and messages may be subject to selective execution or omission. Additionally, such steps in each embodiment need not be always performed in order and thus the order of steps may be changeable. Similarly, messages need not be always delivered in order and thus the order of message delivery may be changeable. Each step and messaging may be performed independently.

Details of embodiments are merely provided, in part or in whole, to promote understanding of the present invention. Therefore, such details may be regarded as expressing a part of the method and device proposed by the present invention. That is, regarding the details of embodiments, a semantics-based approach may be more desirable than a syntax-based approach. While embodiments disclosed herein are particularly shown and described, this disclosure is not intended to limit the scope of the present invention. Namely, it will be apparent to those skilled in the art that various modifications based on the subject matter of the present invention are possible.

A base station (also referred to as an evolved Node B or an eNB) may require special measures for successfully paging a terminal (also referred to as user equipment or UE) that has poor reception performance or is located in a weak signal-received area. One of these measures is that the base station pages the terminal several times. In order to page the terminal several times, a mobility management entity (MME) may include additional information into an S1: paging message to be delivered to the base station. Throughout the present invention, this additional information is referred to as coverage enhancement (CE) assistance information.

For example, the CE assistance information transmitted by the MME may include CE level information of the terminal to be used for determining the degree of repetition when the base station transmits a paging signal to the terminal.

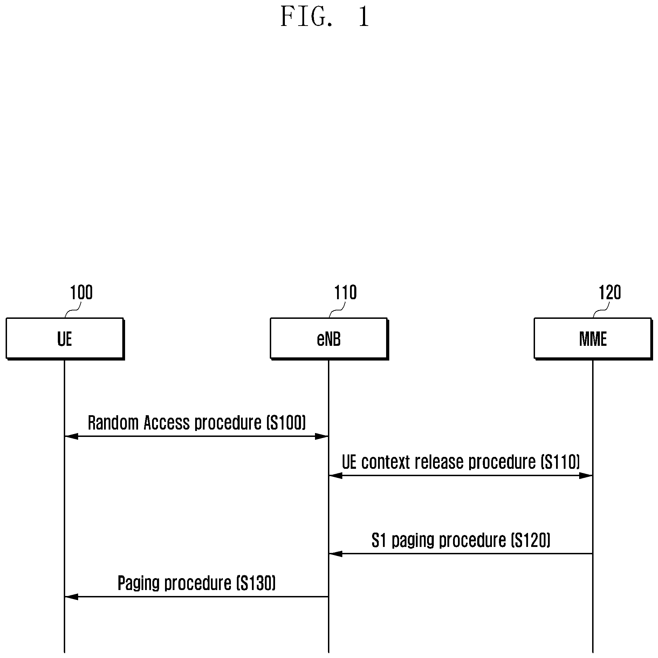

FIG. 1 is a diagram illustrating a method in which eNB and MME identify a CE level of UE and transmit a paging signal based on the identified CE level, according to an embodiment of the present invention.

Specifically, the MME 120 may obtain information from the eNB 110 to generate CE assistance information, and in case of calling the UE 100, the MME 120 may include the CE assistance information into the S1: PAGING message.

First, at step S100, the eNB 110 may identify the CE level of the UE 100 through a random access procedure.

Specifically, in the random access procedure, the UE 100 may send a random access preamble by using a physical random access channel (PRACH) for random access. Then, the eNB 110 may identify the CE level of the UE depending on a PRACH resource through which the UE 100 transmits the random access preamble.

To this end, a particular PRACH resource may be associated with a particular CE level. Information on PRACH resources may be included in a system information block (SIB) broadcasted by the eNB 100. For example, the SIB may include information on time and frequency of the PRACH resource to transmit the random access preamble according to the CE level of the UE.

In addition, the SIB may further include the number of PRACH repetitions and the maximum number of preamble transmission attempts according to the CE level. The number of PRACH repetitions may mean the number of times that a certain resource for the PRACH is repeated, and the maximum number of preamble transmission attempts may mean the maximum number of times that the UE attempts to transmit a preamble.

In other words, in the random access procedure, the UE 100 may notify its CE level to the eNB 110 by sending a preamble using PRACH resource information corresponding to its CE level which is obtained from PRACH resource information according to CE levels included in the SIB broadcasted by the eNB 110.

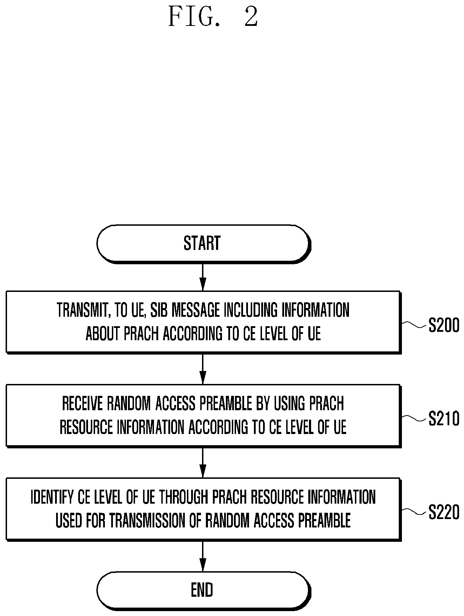

Specifically, a method in which the eNB 110 identifies the CE level of the UE 100 is as shown in FIG. 2.

First, at step S200, the eNB 110 may transmit, to the UE 100, an SIB message including information on the PRACH according to the CE level of the UE 100. The SIB may include PRACH resource information according to the CE level. For example, the SIB may include information on the PRACH resource through which the UE having a high CE level will transmit the random access preamble, and information on the PRACH resource through which the UE having a low CE level will transmit the random access preamble.

Classifying the CE levels into a high level and a low level is exemplary only, and the CE levels may be expressed in various manners. For example, the CE levels may be classified into categories 1 through 5 in the order of lower level. In this case, the SIB may include information on the PRACH resource through which each of the UEs having categories 1 through 5 will transmit the random access preamble.

At step S210, the eNB 110 may receive the random access preamble by using the PRACH resource information according to the CE level of the UE 100. Specifically, the UE 100 may transmit the random access preamble by using the PRACH resource information according to its CE level, based on the information included in the SIB. For example, the UE 100 may transmit the random access preamble through a PRACH resource region designated according to its CE level.

At step S220, the eNB 110 may identify the CE level of the UE 100 through the PRACH resource information used for transmission of the random access preamble. For example, the eNB 110 may determine whether the CE level of the UE is high or low, based on a resource region in which the UE 100 transmits the random access preamble.

The eNB 110 may determine time/frequency resources and a repetition factor to be considered when transmitting a random access response message according to the identified CE level of the UE 100.

Returning to FIG. 1, if the eNB 110 and the UE 100 are connected to each other through the random access procedure such as step S100, the eNB 110 and the UE 100 may perform communication using radio resources.

Meanwhile, if the UE 100 enters an idle mode under a specific condition, the eNB 110 may release a connection with the UE 100 at step S110. At this time, the eNB 110 may release information on the UE 100 possessed by the MME 120. Therefore, the eNB 110 may transmit a UE context release complete message to the MME 120. The eNB 110 may include the CE level information in the UE context release complete message at the time of releasing the S1 interface. For example, the UE context release complete message may include information as shown in Table 1. Although the CE level information is simply expressed as high and low, it is obvious that more varied granularity or any other form may be used for expression. For example, the CE level may be expressed in the form of category 1 to category 5.

**[Table 1]**

| IE/Group Name | Presence | Range | IE type and reference | Semantics description | Criticality | Assigned criticality |
|---|---|---|---|---|---|---|
| Message Type | M | | 9.2.1.1 | | YES | reject |
| MME UE S1AP ID | M | | 9.2.3.3 | | YES | ignore |
| eNB UE S1AP ID | M | | 9.2.3.4 | | YES | ignore |
| Criticality Diagnostics | O | | 9.2.1.21 | | YES | ignore |
| User Location Information | O | | 9.2.1.93 | | YES | ignore |
| CE Level Information | O | | ENUMERATED {High, Low, ...} | | | |

Meanwhile, the eNB 110 may further include information on a cell identifier together with the CE level information. The CE level may be information corresponding to a cell in which the UE 100 performs the random access procedure as discussed at step S100. Therefore, the eNB 110 may transmit, to the MME 120, the UE context release complete message including the CE level information and the cell identifier information.

Then, at step S120, the eNB 110 may receive a paging message from the MME 120. Specifically, if a notification based on downlink data for the UE 100 is received, the MME 120 may transmit the paging message including CE assistance information. For example, the CE assistance information may include the above-described CE level information of the UE 100. Also, the CE assistance information may further include cell identifier information.

In addition, at step S130, the eNB 110 may transmit a paging signal to the UE 100 according to the CE level information. For example, depending on the CE level information of the UE 100, the eNB 110 may vary the number of times to transmit the paging signal. Specifically, the eNB 110 may increase the number of paging signal transmissions for UE having a low CE level, compared to UE having a high CE level.

Meanwhile, the MME 120 may transmit the paging message to any eNB that does not transmit a message including the CE level information, as well as to the eNB 110 that transmits the message including the CE level information of the UE 100.

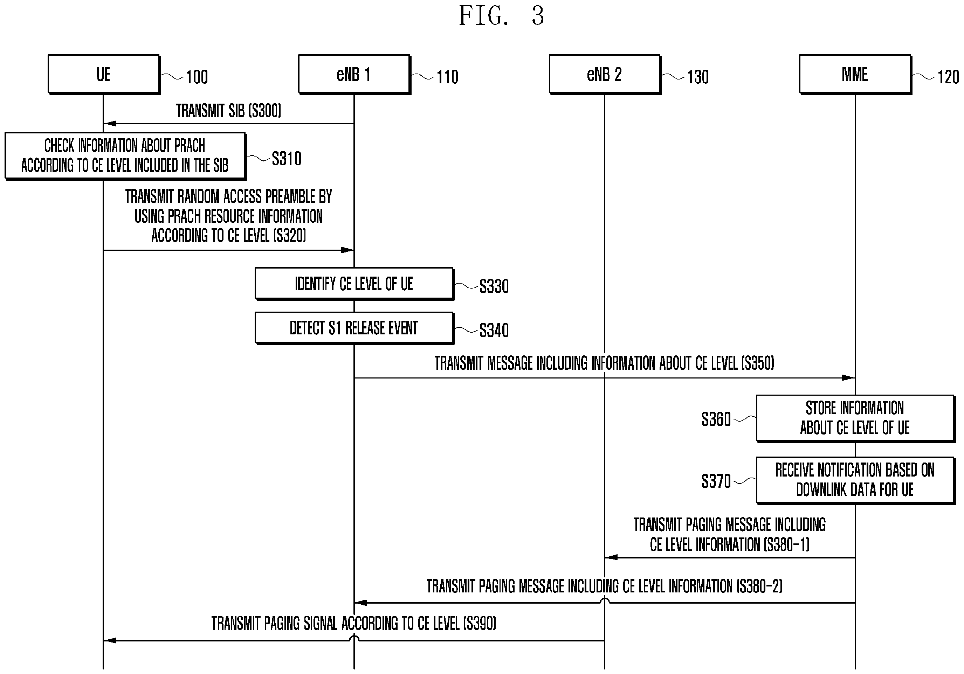

Specifically, a method in which the MME 120 transmits the paging message to a plurality of eNBs will be described with reference to FIG. 3.

First, at step S300, the UE 100 may receive the system information block (SIB) from the first eNB 110. As described above, in the random access procedure, the UE 100 may receive the SIB including information on the PRACH for transmitting the random access preamble. For example, the first eNB 110 may transmit, to the UE 100, an SIB message including the PRACH information according to the CE level of the UE.

At step S310, the UE 100 may identify the PRACH information according to the CE level included in the SIB. At step S320, the UE 100 may transmit the random access preamble to the first eNB 110 by using the identified PRACH resource information according to its CE level.

For example, if the CE level of the UE 100 is low and if the SIB received by the UE 100 includes PRACH resource information to be used for the UE having a low CE level to transmit a preamble, the UE 100 may transmit the preamble to the first eNB 110 through a resource region based on the PRACH resource information.

At step S330, the first eNB 110 may identify the CE level of the UE 100. For example, based on the PRACH resource region in which the UE 100 transmits the preamble, the first eNB 110 may identify the CE level of the UE 100.

At step S340, the first eNB 110 that identifies the CE level of the UE 100 may detect an S 1 release event of the UE. If the S 1 release event of the UE is detected, the first eNB 110 may transmit a message including information on the CE level to the MME 120 at step S350.

Specifically, when an RRC connection between the UE 100 and the first eNB 110 is established through the random access procedure, the UE 100 and the first eNB 110 may perform communication using radio resources. If the UE 100 moves or does not transmit and receive data to and from the first eNB 110 for a predetermined time, the mode of the UE 100 may be the idle mode.

Thereafter, when the idle mode continues for a given time, the first eNB 110 may release the connection with the UE 100.

The eNB may release the information on the UE possessed by the MME. For this, in case of releasing the connection with the UE 100, the first eNB 110 may transmit a release request message such as an S1 UE context release request message to the MME 120. Then, if an S1 UE context release command is received from the MME 120, the first eNB 110 may transmit an RRC connection release message to the UE 100. The first eNB 110 that transmits the RRC connection release message to the UE 100 may transmit an S1 UE context release complete message to the MME 120 to release the connection with the UE 100.

In this case, the first eNB 110 may include information on the CE level into the S1 UE context release complete message to be transmitted to the MME 120. Alternatively, the first eNB 110 may transmit the information on the CE level together with the S1 UE context release complete message.

In addition, the first eNB 110 may transmit, to the MME 120, not only the CE level information, but also cell identifier information on a cell in which the UE 100 performs the random access procedure.

Meanwhile, at step S360, the MME 120 may store the information on the CE level of the UE 100. Additionally, when a notification based on downlink data for the UE is received at step S370, the MME 120 may transmit the paging message including the CE level information to the second eNB 130 as well as to the first eNB 110 at step S380-1 and at step S380-2.

Specifically, when the downlink data to be transmitted to the UE 100 is received from a PDN gateway (P-GW) to a serving gateway (S-GW), the MME 120 may receive a downlink data notification (DDN) from the S-GW although not shown in FIG. 3. Upon the downlink data notification, the MME 120 may transmit the paging message to at least one eNB so that the downlink data will be transmitted to the UE 100. Even when the paging message is transmitted to any eNB that does not transmit the information on the CE level of the UE 100, the MME 120 may transmit the paging message including the CE level.

Meanwhile, among eNBs that receive the paging message, the eNB that is not connected to the UE 100 may ignore the paging message.

In addition, the eNB connected to the UE 100 may transmit a paging signal to the UE 100 according to the received CE level. For example, the eNB may transmit the paging signal x times to the UE having a high CE level. The eNB may transmit the paging signal y times to the UE having a low CE level. Here, y may be a constant greater than x.

Alternatively, if the CE levels are defined as categories 1 to 5, the eNB may transmit the paging signal several times in the order of higher or lower category of the CE level.

In the embodiment of FIG. 3, if the UE 100 is connected to the second eNB 130 when the MME 120 transmits the paging message, the second eNB 130 may transmit the paging signal to the UE according to the CE level of the UE 100.

Meanwhile, according to another embodiment of the present invention, the eNB may not transmit a message including information on the CE level of the UE to the MME.

As described above, the eNB may identify the CE level of the UE through the random access procedure. On the other hand, when sending the UE context release complete message to the MME, if the eNB does not perform the random access procedure with respect to the cell serving the UE (e.g., a handover may occur in the eNB) the eNB may determine that the CE level is no longer valid.

Similarly, even if the eNB performs the random access procedure for the cell serving the UE at the time of sending the UE context release complete message, and if the eNB determines that the CE level of the UE has changed after the random access procedure (e.g., this change may be found from a measurement report received from the UE), the CE level may be determined to be no longer valid.

Therefore, if the eNB determines that the CE level is no longer valid, the eNB may not include the CE level information in the UE context release complete message even though having the CE level information.

On the other hand, the eNB may determine that the identified CE level of the UE is useful information even if a situation of the UE changes. For example, it may be determined that the UE requiring 15dB of CE will require at least 10dB of CE even if the situation changes. According to this position, the CE level may be delivered at the time of handover. For example, the CE level may be delivered from a source eNB to a target eNB through a transparent container during the S1 handover or through an X2 message during the X2 handover.

Since the CE level is information corresponding to the cell in which the UE performs the random access procedure, the CE level may be included in the UE context release complete message together with the corresponding cell identifier. If the CE level may not be delivered together with the cell identifier upon handover, whether or not the cell identifier is included may be selectively determined when the CE level is transmitted through the UE context release complete message.

As described above, the eNB may receive the CE assistance information from the MME through the S1: PAGING message. The above-described CE assistance information may include a cell identifier received by the MME together with CE level information.

The eNB that transmits the CE level information to the MME may be different from the eNB that receives the paging message including the CE level information. Since the CE level delivered to the MME is generally useful information for successfully paging the UE even if the UE situation changes, the MME may also include the CE assistance t information into the S1: PAGING message to be delivered to any other eNB. The CE assistance information may be delivered together with S 1 paging attempt information.

The eNB may then page the UE by using the CE assistance information and/or the S 1 paging attempt information.

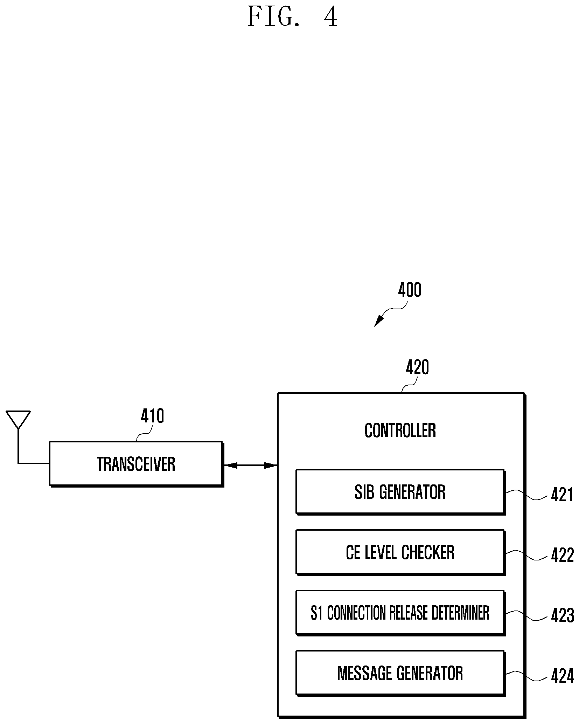

Meanwhile, FIG. 4 is a block diagram illustrating a configuration of a base station (i.e., eNB) according to an embodiment of the present invention. As shown in FIG. 4, the eNB 400 may include a transceiver 410 and a controller 420.

The transceiver 410 is a component for performing communication with the UE and the MME. For example, the eNB 400 may perform wireless communication with the UE through the transceiver 410.

The controller 420 is a component for controlling the eNB 400 as a whole. For example, the controller 420 may identify information on a coverage enhancement (CE) level of the UE. Also, the controller 420 may control the transceiver 410 to transmit a message including information on the CE level of the UE to the mobility management entity (MME).

In addition, if a paging message including information on the CE level is received from the MME, the controller 420 may control the transceiver 410 to transmit a paging signal to the UE, based on the CE level of the UE.

Specifically, the controller 420 may vary the number of times the paging signal is transmitted, depending on the CE level of the UE. For example, when the CE level of the UE is high, the controller 420 may control the transceiver 410 to transmit the paging signal to the UE m times for a predetermined time. Also, when the CE level of the UE is low, the controller 420 may control the transceiver 410 to transmit the paging signal to the UE n times for a predetermined time.

Meanwhile, according to an embodiment of the present invention, the controller 420 may include an SIB generator 421, a CE level checker 422, an S1 connection release determiner 423, and a message generator 424.

The SIB generator 421 may generate a system information block (SIB) including physical random access channel (PRACH) resource information according to the CE level of the UE.

In addition, the SIB generator 421 may generate the SIB that further includes information on the number of PRACH repetitions according to the CE level and the maximum number of preamble transmission attempts according to the CE level.

If a random access preamble is received from the UE using the PRACH resource information according to the CE level of the UE, the CE level checker 422 may identify the CE level of the UE through the PRACH resource information used for reception of the random access preamble.

Meanwhile, the S1 connection release determiner 423 may determine the S 1 connection with the MME to be released when a predetermined S 1 connection release event occurs. For example, if the UE moves, or if the UE does not transmit or receive data to or from the eNB 400 for a predetermined time, the mode of the UE may be an idle mode. Thereafter, when the idle mode continues for a given time, the eNB 400 may release the connection with the UE.

Also, the S1 connection release determiner 423 may determine an S1 connection release. For the S1 connection release, the message generator 424 may generate a message to be transmitted to the UE or the MME. For example, the message generator 424 may generate an S1 UE context release complete message including information on the CE level of the UE. The generated S 1 UE context release complete message may be transmitted to the MME through the transceiver 410.

Meanwhile, the message generator 424 generates the S1 UE context release complete message only in one embodiment, and may generate other messages to be transmitted to an external device such as the UE or the MME.

The SIB generator 421, the CE level checker 422, the S1 connection release determiner 423 and the message generator 424 may be implemented as hardware in the controller 420 and may be also implemented in the form of program, software or application.

Additionally, it is merely one embodiment that the controller 420 includes the SIB generator 421, the CE level checker 422, the S1 connection release determiner 423, and the message generator 424. Alternatively, the above-discussed operations may be executed by the controller 420.

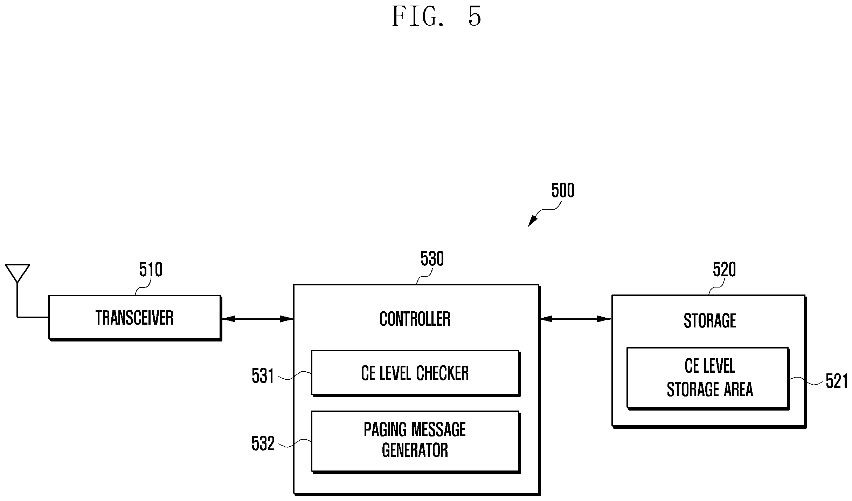

Meanwhile, FIG. 5 is a block diagram illustrating components of an MME 500 according to an embodiment of the present invention. The MME 500 may include a transceiver 510, a storage 520, and a controller 530.

The transceiver 510 is a component for performing communication with an external device such as eNB. For example, the transceiver 510 may perform communication with the eNB through the S1 interface.

The storage 520 may store various kinds of information. For example, when a message including information on UE is received from the eNB, the storage 520 may store such information.

The controller 530 is a component for controlling the MME 500 as a whole. Specifically, when information on a coverage enhancement (CE) level of the UE is identified by the eNB, the controller 530 may receive a message including the information on the CE level of the UE from the eNB. For example, when an S1 connection is released by the eNB, the controller 530 may receive an S1 UE context release complete message including the information on the CE level through the transceiver 510.

In addition, the controller 530 may store the received information on the CE level of the UE in the storage 520. For example, the controller 530 may store the received information on the CE level of the UE in a CE level storage area 521 of the storage 520.

Meanwhile, if a notification based on downlink data for the UE is received through the transceiver 510, the controller 530 may control the transceiver 510 to transmit a paging message including the information on the CE level of the UE.

Also, the controller 530 may control the transceiver 510 to transmit the paging message to the eNB, which transmits the message including the information on the CE level of the UE, and even to any other eNB which does not transmit such a message including the information on the CE level.

For example, if downlink data to be transmitted to the UE which is in the idle mode is generated, and if a notification about the generation of the downlink data is received, the controller 530 may control the transceiver 510 to transmit the paging message including the information on the CE level to all eNBs located in a tracking area where the UE exists.

Therefore, depending on the location of the UE, the controller 530 may transmit the paging message including the information on the CE level to any eNB that does not transmit the S1 UE context release complete message including the information on the CE level.

Meanwhile, the controller 530 may include a CE level checker 531 and a paging message generator 532. In this case, the CE level checker 531 may identify the CE level included in the message received from the eNB. The paging message generator 532 may transmit a paging message including information on the CE level to the eNB.

The CE level checker 531 and the paging message generator 532 as well as the controller 530 may be implemented as hardware. This is, however, one embodiment only. The controller 530, the CE level checker 531 and the paging message generator 532 may be also implemented in the form of program, application or software.

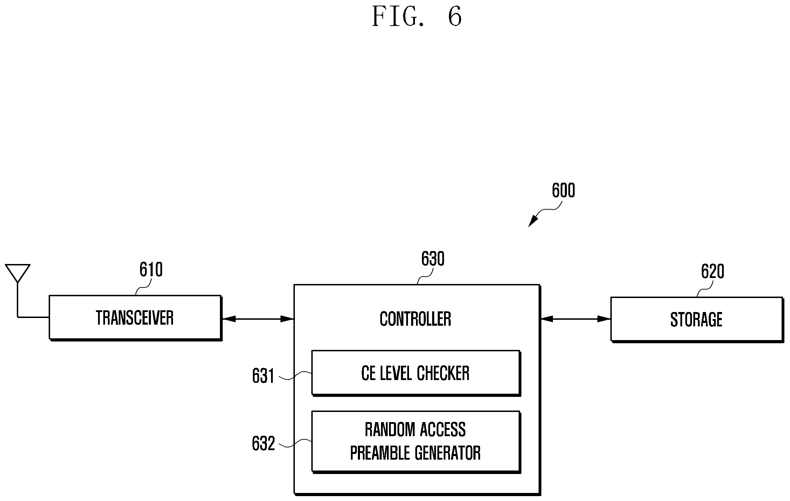

Meanwhile, FIG. 6 is a block diagram illustrating a configuration of a terminal (i.e., UE) according to an embodiment of the present invention. The UE 600 may include a transceiver 610, a storage 620, and a controller 630.

The transceiver 610 is a component for performing communication with any other UE or eNB. For example, the UE 600 may perform communication with other UE through the transceiver 610.

The storage 620 may store various kinds of information. For example, when a message including information on CE levels is received from the eNB, the storage 520 may store the information on the CE levels.

The controller 630 is a component for controlling the UE 600 as a whole. Specifically, the controller 630 may control the transceiver 610 to receive, from the eNB, a system information block (SIB) message including information on a physical random access channel (PRACH) according to the CE level of the UE.

In addition, the controller 630 may identify the CE level of the UE 600 from the SIB. Also, the controller 630 may control the transceiver 610 to transmit a random access preamble to the eNB by using the PRACH resource corresponding to the identified CE level of the UE.

The SIB may further include information on the number of PRACH repetitions and the maximum number of preamble transmission attempts. In this case, the controller 630 may control the transceiver 610 to transmit the random access preamble, based on the number of PRACH repetitions and the maximum number of preamble transmission attempts.

Meanwhile, if an S1 connection with the eNB and the MME is determined to be released, the information on the CE level of the UE may be transmitted to the MME by the eNB.

The controller 630 may include a CE level checker 631 and a random access preamble generator 632. In this case, the CE level checker 631 may identify the information on the CE level included in the SIB received from the eNB. The random access preamble generator 632 may generate a random access preamble to be transmitted to the eNB through PRACH corresponding to the CE level.

The CE level checker 631 and the random access preamble generator 632 as well as the controller 630 may be implemented as hardware. This is, however, one embodiment only. The controller 630, the CE level checker 631 and the random access preamble generator 632 may be also implemented in the form of program, application or software.

As described heretofore, the UE, the eNB and the MME allow successfully paging the UE by identifying the CE level of the UE even when the UE has poor reception performance or is located in a region where a received signal is weak.

In addition, the controller of each of the eNB, the MME and the UE may be implemented in the form of including a CPU and a random access memory (RAM). The controller may perform the above-discussed operations by copying programs stored in a nonvolatile memory to the RAM and then executing the copied programs.

The controller may be used in the same meaning as a central processing unit (CPU), a microprocessor, a control unit, a processor, and an operating system. Also, the controller of each of the eNB, the MME and the UE may be implemented as a single-chip system (also referred to as a system-on-a-chip, a system on chip, SOC, or SoC) together with other functional units such as the transceiver included in each of the eNB, the MME and the UE.

Meanwhile, the methods according to various embodiments described above may be software-coded and stored in a non-transitory readable medium. This non-transitory readable medium may be mounted and used in various devices.

The non-transitory readable medium means a medium that is readable by a device and stores data semipermanently rather than a medium that stores data for a short period of time, such as a register, cache, memory, etc. Specifically, the non-transitory readable medium may be a CD, a DVD, a hard disk, a Blu-ray disk, a USB, a memory card, a ROM, or the like.

While the present invention has been particularly shown and described with reference to exemplary embodiments thereof, it is clearly understood that the same is by way of illustration and example only and is not to be taken in conjunction with the present invention. It will be understood by those skilled in the art that various changes in form and details may be made therein without departing from the subject matter and scope of the present invention.

## Claims

1. A method for calling a terminal by a base station, the method comprising:
identifying information on about a coverage enhancement (CE) level of the terminal;
transmitting a message including the information on the CE level of the terminal to a mobility management entity (MME); and
transmitting a paging signal to the terminal, based on the CE level of the terminal, if a paging message including the information on the CE level from the MME is received.

2. The method of claim 1, wherein the identifying of the information on the CE level includes:
transmitting, to the terminal, a system information block (SIB) message including physical random access channel (PRACH) resource information according to the CE level of the terminal;
receiving a random access preamble from the terminal by using the PRACH resource information according to the CE level of the terminal; and
identifying the CE level of the terminal through the PRACH resource information used for reception of the random access preamble.

3. The method of claim 2, wherein the SIB message includes the number of PRACH repetitions according to the CE level and the maximum number of preamble transmission attempts according to the CE level.

4. The method of claim 1, wherein the transmitting of the message to the MME includes:
determining an S1 connection with the MME to be released; and
transmitting, to the MME, an S1 UE context release complete message including the information on the CE level of the terminal.

5. A method for transmitting a paging message by a mobility management entity (MME), the method comprising:
receiving a message including information on a coverage enhancement (CE) level of a terminal from a base station when the information on the CE level of the terminal is identified by the base station;
storing the received information on the CE level of the terminal; and
transmitting a paging message including the information on the CE level of the terminal if a notification based on downlink data for the terminal is received.

6. The method of claim 5, wherein the receiving of the message includes:
receiving an S1 UE context release complete message including the information on the CE level of the terminal from the base station when an S1 connection is determined to be released.

7. The method of claim 5, wherein the transmitting of the paging message includes:
transmitting the paging message to the base station which transmits the message including the information on the CE level of the terminal, and to the base station which does not transmit the message including the information on the CE level.

8. A method of a terminal, the method comprising:
receiving a system information block (SIB) message including information on physical random access channel (PRACH) according to a coverage enhancement (CE) level of the terminal from a base station; and
transmitting a random access preamble to the base station by using PRACH resource information corresponding to the CE level of the terminal.

9. A base station for paging a terminal, the base station comprising:
a transceiver configured to transmit and receive a signal; and
a controller configured to identify information on a coverage enhancement (CE) level of the terminal, to control the transceiver to transmit a message including the information on the CE level of the terminal to a mobility management entity (MME), and to control the transceiver to transmit a paging signal to the terminal, based on the CE level of the terminal, if a paging message including the information on the CE level from the MME is received.

10. The base station of claim 9, wherein the controller is further configured to control the transceiver to transmit a system information block (SIB) message including physical random access channel (PRACH) resource information according to the CE level of the terminal to the terminal, to control the transceiver to receive a random access preamble from the terminal by using the PRACH resource information according to the CE level of the terminal, and to identify the CE level of the terminal through the PRACH resource information used for reception of the random access preamble.

11. The base station of claim 10, wherein the SIB message includes the number of PRACH repetitions according to the CE level and the maximum number of preamble transmission attempts according to the CE level.

12. The base station of claim 9, wherein the controller is further configured to determine an S1 connection with the MME to be released, and to control the transceiver to transmit an S1 UE context release complete message including the information on the CE level of the terminal to the MME.

13. A mobility management entity (MME) for transmitting a paging message, the MME comprising:
a transceiver configured to transmit and receive a signal; and
a controller configured to control the transceiver to receive a message including information on a coverage enhancement (CE) level of a terminal from a base station when the information on the CE level of the terminal is identified by the base station, to store the received information on the CE level of the terminal, and to control the transceiver to transmit a paging message including the information on the CE level of the terminal if a notification based on downlink data for the terminal is received.

14. The MME of claim 13, wherein the controller is further configured to control the transceiver to receive an S1 UE context release complete message including the information on the CE level of the terminal from the base station when an S1 connection is determined to be released.

15. The MME of claim 13, wherein the control unit is further configured to control the transceiver to transmit the paging message to the base station which transmits the message including the information on the CE level of the terminal, and to the base station which does not transmit the message including the information on the CE level.
